# EUROPÄISCHE PATENTSCHRIFT

(11) **EP 1 759 175 B1**
(45) Veröffentlichungstag und Bekanntmachung des Hinweises auf die Patenterteilung: **26.02.2020**
(21) Anmeldenummer: 05729749.1
(22) Anmeldetag: 02.03.2005
(51) Int. Cl.: G01F 1/00, H01L 41/00

(54) **VORRICHTUNG ZUR BESTIMMUNG UND/ODER ÜBERWACHUNG EINER PROZESSGRÖSSE**
DEVICE FOR DETERMINING AND/OR MONITORING A PROCESS VARIABLE
DISPOSITIF POUR DETERMINER ET/OU SURVEILLER UNE VARIABLE DE PROCESSUS

(30) Priorität: 03.03.2004 DE 102004010992
(43) Veröffentlichungstag der Anmeldung: 07.03.2007
(73) Patentinhaber: Endress+Hauser SE+Co. KG, 79689 Maulburg (DE)
(72) Erfinder: LOPATIN, Sergej, 79540 Lörrach (DE)
(74) Vertreter: Andres, Angelika Maria
(86) Internationale Anmeldenummer: PCT/EP2005/050905
(87) Internationale Veröffentlichungsnummer: WO 2005/085769

(56) Entgegenhaltungen:
- JP-A- 60 223 300
- US-A- 3 745 384
- US-A- 4 193 010
- US-A- 5 844 491
- PATENT ABSTRACTS OF JAPAN Bd. 010, Nr. 075 (E-390), 25. März 1986 (1986-03-25) & JP 60 223300 A (SUWA SEIKOSHA KK), 7. November 1985 (1985-11-07)

## Beschreibung

Die Erfindung bezieht sich auf eine Vorrichtung zur Bestimmung und/oder Überwachung einer Prozessgröße eines Mediums, mit einer an einer Membran befestigten schwingfähigen Einheit, mit einer Sende-/Empfangseinheit, die die Membran und die schwingfähige Einheit zu Schwingungen anregt und die die Schwingungen der schwingfähigen Einheit empfängt, wobei es sich bei der Sende-/Empfangseinheit um ein scheibenförmiges piezoelektrisches Element handelt, und mit einer Regel-/Auswerteeinheit, die anhand der Schwingungen der schwingfähigen Einheit die Prozessgröße überwacht und/oder bestimmt. Bei der Prozessgröße handelt es sich beispielsweise um den Füllstand, die Dichte oder die Viskosität eines Mediums.

Es sind bereits Vorrichtungen mit zumindest einem Schwingelement, sog. Vibrationsdetektoren, zur Detektion bzw. zur Überwachung des Füllstandes eines Füllguts in einem Behälter bekannt geworden. Bei dem Schwingelement handelt es sich üblicherweise um zumindest einen Schwingstab, der an einer Membran befestigt ist. Die Membran wird über einen elektro-mechanischen Wandler, z. B. ein piezoelektrisches Element, zu Schwingungen angeregt. Aufgrund der Schwingungen der Membran führt auch das an der Membran befestigte Schwingelement Schwingungen aus.

Als Füllstandsmessgeräte ausgebildete Vibrationsdetektoren nutzen den Effekt aus, dass die Schwingungsfrequenz und die Schwingungsamplitude abhängig sind von dem jeweiligen Bedeckungsgrad des Schwingelements: Während das Schwingelement in Luft frei und ungedämpft seine Schwingungen ausführen kann, erfährt es eine Frequenz- und Amplitudenänderung, sobald es teilweise oder vollständig in das Füllgut eintaucht. Anhand einer vorbestimmten Frequenzänderung (üblicherweise wird die Frequenz gemessen) lässt sich folglich ein eindeutiger Rückschluss auf das Erreichen des vorbestimmten Füllstandes des Füllguts in dem Behälter ziehen. Füllstandsmessgeräte werden übrigens vornehmlich als Überfüllsicherungen oder zum Zwecke des Pumpenleerlaufschutzes verwendet.

Darüber hinaus wird die Dämpfung der Schwingung des Schwingelements auch von der jeweiligen Dichte des Füllguts beeinflusst. Daher besteht bei konstantem Bedeckungsgrad eine funktionale Beziehung zur Dichte des Füllguts, so dass Vibrationsdetektoren sowohl für die Füllstands- als auch für die Dichtebestimmung bestens geeignet sind. In der Praxis werden zwecks Überwachung und Erkennung des Füllstandes bzw. der Dichte des Füllguts in dem Behälter die Schwingungen der Membran aufgenommen und mittels zumindest eines Piezoelements in elektrische Empfangssignale umgewandelt. Die elektrischen Empfangssignale werden anschließend von einer Auswerte-Elektronik ausgewertet. Im Falle der Füllstandsbestimmung überwacht die Auswerte-Elektronik die Schwingungsfrequenz und/oder die Schwingungsamplitude des Schwingelements und signalisiert den Zustand 'Sensor bedeckt' bzw. 'Sensor unbedeckt', sobald die Messwerte einen vorgegebenen Referenzwert unter- oder überschreiten. Eine entsprechende Meldung an das Bedienpersonal kann auf optischem und/oder auf akustischem Weg erfolgen. Alternativ oder zusätzlich wird ein Schaltvorgang ausgelöst; so wird etwa ein Zu- oder Ablaufventil an dem Behälter geöffnet oder geschlossen.

Aus der DE 100 22 891 ist eine äußerst vorteilhafte Variante einer Sende-/ Empfangseinheit bekannt geworden, über die einerseits die Membran des Vibrationsdetektors zu Schwingungen angeregt wird und über die andererseits die Schwingungen der Membran aufgenommen und in elektrische Signale umgewandelt werden. Es sind jeweils zwei Sende- und Empfangselektroden vorgesehen, die im wesentlichen 90°-Kreissegmente und auf derselben Seite eines scheibenförmigen piezoelektrischen Elements angeordnet sind. Das piezoelektrische Element selbst ist homogen polarisiert und hat einen kreisförmigen Querschnitt. Zum Betreiben des piezoelektrischen Elements ist ein Inverter vorgesehen.

Aus der US5844491 ist ein mechanischer Oszillator umfassend ein Gehäuse mit einer Membran bekannt geworden. Auf der Membran ist ein piezoelektrisches Element mit drei Bereichen angeordnet, wobei jeder der Bereiche auf einer der Membran abgewandten Seite mittels einer Elektrode kontaktiert. Es sind demnach zwei Sendeelektroden und eine Empfangselektrode vorhanden.

Der Erfindung liegt die Aufgabe zugrunde, die Ausgestaltung einer Vorrichtung zur Bestimmung und/oder Überwachung einer Prozessgröße derartig zu verbessern, dass der Konstruktions- und Schaltungsaufwand möglichst gering ist.

Die Aufgabe wird dadurch gelöst, dass das scheibenförmige piezoelektrische Element (15) genau zwei Segmente (18) aufweist, die gegensinnig zueinander polarisiert sind, dass auf der Seite (16) des scheibenförmigen piezoelektrischen Elements (15), welche von der Membran (5) abgewandt ist, genau zwei entgegengesetzt polarisierte Elektroden (20) aufgebracht sind, dass an die Elektroden ein Wechselspannungssignal angelegt ist, und dass die beiden Segmente (18) elektrisch in Reihe geschaltet sind. Das piezoelektrische Element weist also Segmente auf, die gegensinnig zueinander polarisiert sind. Die Richtung der Polarisation sollte jedoch im Wesentlichen senkrecht zur Membran sein. Weiterhin sind diese Segmente mit Elektroden verbunden, die ebenfalls unterschiedliches Polarisationszeichen tragen. Dies hat zur Folge, dass das Anlegen einer Wechsel-Spannung an die Elektroden bei den Segmenten jeweils abwechselnd zu einer Verkürzung und einer Erhöhung der Schichtdicke des piezoelektrischen Elements führt. Der große Vorteil liegt darin, dass das piezoelektrische Element nur von einer Seite kontaktiert werden muss, es müssen also keine Elektroden an die Unterseite - d.h. die der Membran zugewandte Seite des piezoelektrischen Elements - herangeführt und mit dem Element verbunden werden. Dies ist vor allem dann wichtig, wenn die Vorrichtung sehr klein dimensioniert ist, so dass nur sehr wenig Platz für das Führen von Leitungen vorhanden ist.

Das Aufbringen von genau zwei entgegengesetzt polarisierten Elektroden auf das piezoelektrische Element mit genau zwei Segmenten ist hinsichtlich der Ausführung und der Kosten minimal. Vorteilhaft ist es, wenn sich die Elektroden genau oberhalb der Segmente befinden und auch jeweils nur mit einem Segment elektrisch leitend verbunden sind.

Eine Ausgestaltung beinhaltet, dass die Elektroden im Wesentlichen formgleich sind. Eine solche symmetrische Ausgestaltung hat den Vorteil, dass es nicht zu einer fehlerhafte Kontaktierung kommen kann. Weiterhin werden so jeweils gleich große Bereiche des piezoelektrischen Elements zu Schwingungen angeregt.

Eine Ausgestaltung sieht vor, dass die Elektroden die Form von Halbkreissegmenten aufweisen. Dies ist eine besondere Ausgestaltung des symmetrischen Aufbaus, wobei diese Ausgestaltung für die Anwendung von zwei Elektroden vorbehalten bleibt.

Eine Ausgestaltung beinhaltet, dass die Elektroden so ausgestaltet und angeordnet sind, dass sie sich kreisringförmig umgeben. Diese Ausgestaltung kann auch bei mehreren Elektroden angewendet werden. Vorzugsweise befindet sich eine Elektrode kreisförmig - also ein Kreisring, dessen Radius des kleineren/inneren Kreises den Radius Null hat - in der Mitte des piezoelektrischen Elements und wird von der Elektrode oder den Elektroden kreisringförmig umgeben wird.

Eine Ausgestaltung sieht vor, dass das piezoelektrische Element auf der Seite, welche der Membran zugewandt ist, zumindest teilweise mit einer leitfähigen Beschichtung versehen ist. Dazu beinhaltet eine Ausgestaltung, dass die Seite, welche der Membran zugewandt ist, elektrisch leitend mit Masse verbunden ist. Somit ergibt sich also die elektrische in Reihe Schaltung der Segmente des piezoelektrischen Elements. Je nach Ausgestaltung der Vorrichtung kann die der Membran zugewandten Seite auch direkt leitend mit dem Gehäuse verbunden werden.

Die Erfindung wird anhand der nachfolgenden Zeichnungen näher erläutert. Es zeigt:
Fig. 1: eine schematische Darstellung der erfindungsgemäßen Vorrichtung,
Fig. 2: ein Schnitt durch die erfindungsgemäße Vorrichtung,
Fign. 3a, 3b und 3c: Draufsichten auf das piezoelektrische Element.

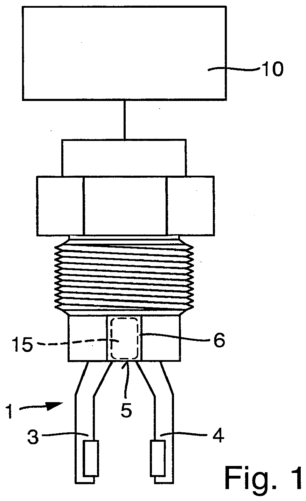

Fig. 1 zeigt eine schematische Darstellung der erfindungsgemäßen Vorrichtung zur Bestimmung und/oder Überwachung einer Prozessgröße eines Mediums in einem Behälter - Behälter und Füllgut sind übrigens in der Fig. 1 nicht gesondert dargestellt. Bei der Prozessgröße kann es sich um den Füllstand, die Dichte oder die Viskosität des Mediums handeln. Die Vorrichtung weist ein im wesentlichen zylindrisches Gehäuse auf. An der Mantelfläche des Gehäuses ist ein Gewinde zur Befestigung der Vorrichtung vorgesehen. An der Membran 5 der Vorrichtung 1 sind zwei in den Behälter hineinragende Schwingstäbe befestigt, welche eine schwingfähige Einheit 1 in Form einer Schwinggabel bilden. Die Membran 5 wird von einer Sende-/Empfangseinheit 6 in Schwingungen versetzt, wobei die Sendeeinheit die Membran 5 mit einer vorgegebenen Sendefrequenz zu Schwingungen anregt und die Empfangseinheit die Antwortsignale der schwingfähigen Einheit 1 empfängt. Aufgrund der Schwingungen der Membran 5 führt auch die schwingfähige Einheit 1 Schwingungen aus, wobei die Schwingungsfrequenz verschieden ist, wenn die schwingfähige Einheit 1 mit dem Füllgut in Kontakt ist und eine Massenankopplung an das Füllgut besteht oder wenn die schwingfähige Einheit 1 frei und ohne Kontakt mit dem Füllgut schwingen kann.

Piezoelektrische Elemente ändern ihre Dicke in Abhängigkeit von einer in Polarisationsrichtung anliegenden Spannungsdifferenz. Liegt eine Wechselspannung an, so oszilliert die Dicke: Nimmt die Dicke zu, so nimmt der Durchmesser des piezoelektrischen Elementes ab; nimmt andererseits die Dicke ab, so vergrößert sich der Durchmesser des piezoelektrischen Elements entsprechend. Aufgrund dieses Schwingungsverhaltens des piezoelektrischen Elements 15 bewirkt die Spannungsdifferenz ein Durchbiegen der in das Gehäuse eingespannten Membran 5. Die auf der Membran 5 angeordneten Schwingstäbe der schwingfähigen Einheit 1 führen aufgrund der Schwingungen der Membran 5 gegensinnige Schwingungen um ihre Längsachse aus. Die elektrischen Empfangssignale werden von der Regel-/Auswerteeinheit 10 ausgewertet.

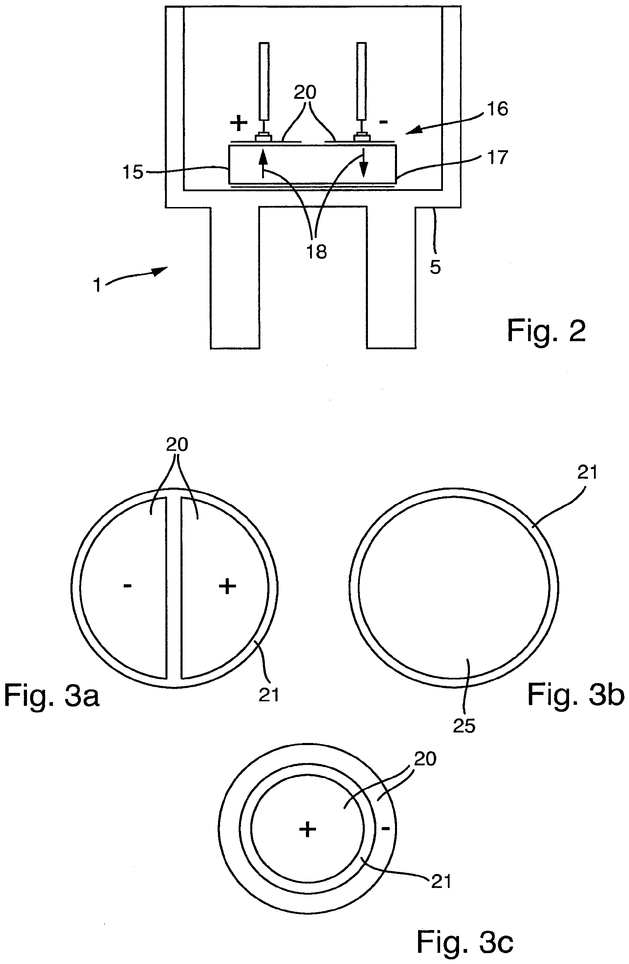

Fig. 2 zeigt einen Schnitt durch die Vorrichtung. Dargestellt ist das piezoelektrische Element 15 mit den hier dargestellten Segmenten 18, die einander entgegengerichtet polarisiert sind (siehe die Pfeile zur Verdeutlichung der Polarisationsrichtungen). Oberhalb der Segmente befinden sich auf der von der Membran abgewandten Seite 16 des piezoelektrischen Elements 15 die Elektroden 20, die jeweils unterschiedliches Polarisationszeichen tragen (- und +). Aufgrund der unterschiedlichen Polarisationsrichtung der Segmente 18 und dem Vorzeichen der Elektroden 20 führt ein Wechselstrom zu einer alternierenden Dickenänderung des piezoelektrischen Elements 15. Die der Membran zugewandte Seite 17 des piezoelektrischen Elements 15 kann elektrisch leitend mit dem Gehäuse und damit mit Masse verbunden werden oder wenn ein galvanische Trennung eingehalten werden muss, kann auch eine Isolationsschicht zwischen dem piezoelektrischen Element 15 und der Membran 5 eingebracht werden. Für eine Kontaktierung der der Membran 5 zugewandten Seite 17 kann auch ein Abschnitt des piezoelektrischen Elements 15 umkontaktiert und somit die Verbindung mit Masse über diesen Abschnitt durchgeführt werden.

In den Fign. 3a bis 3c sind zwei Ausgestaltungen der von der Membran abgewandten Seite des piezoelektrischen Elements (Fign. 3a und 3c) und eine Ausgestaltung der der Membran 5 zugewandten (Fig. 3b) Seite dargestellt. Das piezoelektrische Element 15 selbst ist jeweils vorzugsweise kreisförmig ausgestaltet. In der Fig. 3a ist eine Variante zu sehen, in der die genau zwei aufgebrachten Elektroden 20 im Wesentlichen halbkreisförmig ausgestaltet sind. Zwischen den Elektroden ist eine Isolationsschicht 21 angebracht, so dass die Elektroden 20 nicht kurzgeschlossen sind. In der Fig. 3c ist die eine Elektrode 20 kreisförmig - bzw. diese Elektrode ist kreisringförmig ausgebildet, wobei jedoch die Dicke des Rings gleich dem Radius des äußeren Kreises ist - und die andere kreisringförmig ausgebildet. Auch hier befindet sich zwischen den Elektroden eine Isolationsschicht 21. Die Fig. 3b zeigt die der Membran zugewandte Seite, die vorzugsweise mit Masse verbunden ist, um eine in Reihe Schaltung der beiden Segmente des piezoelektrischen Elements zu bewirken. Auf der der Membran zugewandten Seite ist eine leitfähige Schicht 25 aufgebracht. Beispielsweise handelt es sich um eine metallische Schicht. Diese Ausgestaltung der der Membran zugewandten Seite lässt sich also sowohl mit der Variante in Fig. 3a als auch in Fig. 3c der anderen Seite kombinieren.

### Bezugszeichenliste

- 1: Schwingfähige Einheit
- 5: Membran
- 6: Sende-/Empfangseinheit
- 10: Regel-/Auswerteeinheit
- 15: Piezoelektrisches Element
- 16: Von der Membran abgewandte Seite des piezoelektrischen Elements
- 17: Der Membran zugewandte Seite des piezoelektrischen Elements
- 18: Segment des piezoelektrischen Elements
- 20: Elektrode
- 21: Isolationsschicht
- 25: Leitfähige Schicht

## Patentansprüche

1. Vorrichtung zur Bestimmung und/oder Überwachung eines vorgegebenen Füllstands, der Dichte oder der Viskosität eines Mediums in einem Behälter,
mit zumindest einem an einer Membran (5) befestigten Schwingstab (1),
mit einer Sende-/Empfangseinheit (6), die die Membran (5) und den zumindest einen Schwingstab (1) zu Schwingungen anregt und die die Schwingungen der Membran (5) und des zumindest einen Schwingstabs (1) empfängt,
wobei es sich bei der Sende-/Empfangseinheit (6) um ein scheibenförmiges piezoelektrisches Element (15) handelt,
und
mit einer Regel-/Auswerteeinheit (10), die anhand der Schwingungen von Membran (5) und Schwingstab (1) den vorgegebenen Füllstand, die Dichte oder die Viskosität überwacht oder bestimmt,
**dadurch gekennzeichnet,**
**dass** das scheibenförmige piezoelektrische Element (15) genau zwei Segmente (18) aufweist, die gegensinnig zueinander polarisiert sind,
**dass** auf der Seite (16) des scheibenförmigen piezoelektrischen Elements (15), welche von der Membran (5) abgewandt ist, genau zwei entgegengesetzt polarisierte Elektroden (20) aufgebracht sind,
**dass** an die Elektroden ein Wechselspannungssignal angelegt ist, und
**dass** die beiden Segmente (18) elektrisch in Reihe geschaltet sind.

2. Vorrichtung nach Anspruch 1,
**dadurch gekennzeichnet,**
**dass** die Elektroden (20) im Wesentlichen formgleich sind.

3. Vorrichtung nach Anspruch 2,
**dadurch gekennzeichnet,**
**dass** die Elektroden (20) die Form von Halbkreissegmenten aufweisen.

4. Vorrichtung nach Anspruch 1 oder 2,
**dadurch gekennzeichnet,**
**dass** die Elektroden (20) so ausgestaltet und angeordnet sind, dass sie sich kreisringförmig umgeben.

5. Vorrichtung nach Anspruch 1,
**dadurch gekennzeichnet,**
**dass** das piezoelektrische Element (15) auf der Seite (17), welche der Membran (5) zugewandt ist, zumindest teilweise mit einer leitfähigen Beschichtung (25) versehen ist.

6. Vorrichtung nach Anspruch 1 oder 5,
**dadurch gekennzeichnet,**
**dass** die Seite (17), welche der Membran (5) zugewandt ist, elektrisch leitend mit Masse verbunden ist.

## Claims

1. Apparatus for determining and/or monitoring a predefined level, the density or the viscosity of a medium in a vessel, with at least one vibrating rod (1) fixed on a membrane (5),
with a transmission/reception unit (6), which excites the membrane (5) and the at least one vibrating rod (1) to produce vibrations, and which receives the vibrations of the membrane (5) and of the at least one vibrating rod (1),
wherein the transmission/reception unit (6) is a disk-shaped piezoelectric element (15),
and
with a control/evaluation unit (10), which uses the vibrations of the membrane (5) and the vibrating rod (1) to monitor or determine the predefined level, the density or the viscosity,
**characterized in that**
the disk-shaped piezoelectric element (15) has precisely two segments (18), which are inversely polarized in relation to one another,
**in that** precisely two electrodes (20), which are polarized in the opposite manner, are fitted on the side (16) of the disk-shaped piezoelectric element (15) that faces away from the membrane (15),
**in that** an alternating voltage signal is applied to the electrodes, and
**in that** the two segments (18) are electrically switched in series.

2. Apparatus as claimed in Claim 1,
**characterized in that**
the electrodes (20) are essentially identical in shape.

3. Apparatus as claimed in Claim 2,
**characterized in that**
the electrodes (20) have the shape of semi-circular segments.

4. Apparatus as claimed in Claim 1 or 2,
**characterized in that**
the electrodes (20) are designed and arranged in such a way that they surround one another in a circular manner.

5. Apparatus as claimed in Claim 1,
**characterized in that**
the piezoelectric element (15) is provided at least partially with a conductive coating (25) on the side (17) facing towards the membrane (5).

6. Apparatus as claimed in Claim 1 or 5,
**characterized in that**
the side (17) facing towards the membrane (5) is connected to ground in an electrically conductive manner.

## Revendications

1. Dispositif destiné à la détermination et/ou la surveillance d'un niveau prédéfini, de la densité ou de la viscosité d'un produit dans un réservoir, avec au moins une tige vibrante (1) fixée sur une membrane (5),
avec une unité d'émission / de réception (6), qui excite en vibrations la membrane (5) et l'au moins une tige vibrante (1), et qui reçoit les vibrations de la membrane (5) et de l'au moins une tige vibrante (1),
dispositif pour lequel il s'agit, concernant l'unité d'émission / de réception (6), d'un élément piézoélectrique (15) en forme de disque,
et
avec une unité de régulation / d'exploitation (10), qui surveille ou détermine, au moyen des vibrations de la membrane (5) et de la tige vibrante (1), le niveau prédéfini, la densité ou la viscosité,
**caractérisé**
**en ce que** l'élément piézoélectrique (15) en forme de disque comprend exactement deux segments (18), qui sont polarisés en sens opposé l'un par rapport à l'autre,
**en ce que** sont déposées, sur le côté de l'élément piézoélectrique (15) en forme de disque, situé à l'opposé de la membrane (15), exactement deux électrodes (20) polarisées en sens opposé,
**en ce qu'**un signal de tension alternative est appliqué sur les électrodes, et
**en ce que** les deux segments (18) sont couplés électriquement en série.

2. Dispositif selon la revendication 1,
**caractérisé**
**en ce que** les électrodes (20) sont pour l'essentiel de forme identique.

3. Dispositif selon la revendication 2,
**caractérisé**
**en ce que** les électrodes (20) présentent la forme de segments semi-circulaires.

4. Dispositif selon la revendication 1 ou 2,
**caractérisé**
**en ce que** les électrodes (20) sont conçues et disposées de telle sorte qu'elles s'entourent en forme d'anneau de cercle.

5. Dispositif selon la revendication 1,
**caractérisé**
**en ce que** l'élément piézoélectrique (15) est muni, sur le côté (17) faisant face à la membrane (5), au moins partiellement d'un revêtement (25) conducteur.

6. Dispositif selon la revendication 1 ou 5,
**caractérisé**
**en ce que** le côté (17) faisant face à la membrane (5) est relié avec la masse avec une liaison électroconductrice.
